# EUROPEAN PATENT APPLICATION

(11) **EP 2 161 672 A1**
(43) Date of publication of application: **10.03.2010**
(21) Application number: 09156893.1
(22) Date of filing: 31.03.2009
(51) Int. Cl.: G06F 21/00

(54) **Terminal and method of protecting the same from virus**

(30) Priority: 22.08.2008 KR 20080082294
(71) Applicant: LG Electronics Inc., Seoul 150-721 (KR)
(72) Inventor: Park, Cheol Hee, Seoul 153-801 (KR)
(74) Representative: Cabinet Plasseraud

(57) **Abstract**

A mobile terminal including a display module, a memory configured to store data, a wireless communication unit configured to wirelessly connect with at least one other terminal, a checking unit configured to check at least a portion of the stored data for virus-infected data infected with a virus, and a controller configured to prevent a wireless communication connection with the at least one other terminal when the checking unit finds virus-infected data infected with the virus.

## Description

This application claims the benefit of the Korean Patent Application No. 10-2008-0082294, filed on August 22, 2008.

The present invention relates to a terminal and corresponding method for preventing virus infected data from being shared among terminals.

Terminals now provide many additional services beside the basic call service. For example, user's can now access the Internet, play games, watch videos, listen to music, capture images and videos, record audio files, etc. Mobile terminals also now provide broadcasting programs such that user can watch television shows, sporting programs, videos etc.

Generally, terminals can be classified into mobile terminals and stationary terminals according to a presence or non-presence of mobility. Further, mobile terminals can be classified into handheld terminals and vehicle mounted terminals. Terminals can also be used to access a personal blog or homepage or communicate with another terminal using the Internet or short-range communication.

However, if a terminal infected with a virus as a malignant code and the like accesses another terminal or website, the virus can spread into the other terminal or website. Moreover, the terminal can also be infected with a virus from the other terminal or website.

Accordingly, one object of the present invention is to address the above-noted and other drawbacks.

Another object of the present invention is directed to a terminal and corresponding method for protecting terminals from a virus.

To achieve these objects and other advantages and in accordance with the purpose of the invention, as embodied and broadly described herein, the present invention provides in one aspect a mobile terminal including a display module, a memory configured to store data, a wireless communication unit configured to wirelessly connect with at least one other terminal, a checking unit configured to check at least a portion of the stored data for virus-infected data infected with a virus, and a controller configured to prevent a wireless communication connection with the at least one other terminal when the checking unit finds virus-infected data infected with the virus.

In another aspect, the present invention provides a method of controlling a mobile terminal, and which includes checking at least a portion of data stored in a memory of the terminal for virus-infected data infected with a virus, and preventing a wireless communication connection with at least one other terminal when the checking step finds virus-infected data infected with the virus.

In still another aspect, the present invention provides a mobile terminal including a display module, a memory configured to store data, a wireless communication unit configured to wirelessly connect with at least one other terminal, a checking unit configured to check at least a portion of the stored data for virus-infected data infected with a virus, and a controller configured to notify the at least one other terminal that the mobile terminal includes the virus-infected data.

In yet another aspect, the present invention provides a method of controlling a mobile terminal, and which includes wirelessly connecting with at least one other terminal, checking at least a portion of data stored in a memory of the terminal for virus-infected data infected with a virus, and notifying the at least one other terminal that the mobile terminal includes the virus-infected data.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to an embodiment of the present invention;

FIG. 2 is a front perspective diagram of a mobile terminal according to an embodiment of the present invention;

FIG. 3 is a rear perspective diagram of the mobile terminal shown in FIG. 2;

FIG. 4 is a block diagram of a wireless communication system in which a mobile terminal according to the present invention is operable;

FIG. 5 is a flowchart illustrating a method of protecting a mobile terminal from a virus according to a first embodiment of the present invention;

FIGS. 6(a)-6(d) are overviews of display screens illustrating a process of informing a user of a virus infection on a menu and a process of disconnecting a short-range communication according to a first embodiment of the present invention are displayed;

FIGS. 7(a)-7(c) are overviews of display screens illustrating a process of informing a user of a virus infection on a standby screen and a process of disconnecting a short-range communication according to a first embodiment of the present invention are displayed;

FIGS. 8(a)-8(c) are overviews of display screens illustrating a process of entering a folder at which virus-infected data is located from a standby screen according to a first embodiment of the present invention is displayed;

FIG. 9 is a flowchart illustrating a method of protecting a mobile terminal from a virus according to a second embodiment of the present invention;

FIGS. 10(a) and 10(b) are overviews of display screens illustrating a process of protecting a mobile terminal from a virus according to a first embodiment of the present invention is displayed;

FIG. 11 is a flowchart illustrating a method of protecting a mobile terminal from a virus according to a third embodiment of the present invention;

FIGS. 12(a)-12(c) are overviews of display screens illustrating a process of protecting a mobile terminal from a virus according to a third embodiment of the present invention is displayed;

FIG. 13 is a flowchart illustrating a method of protecting a mobile terminal from a virus according to a fourth embodiment of the present invention;

FIGS. 14(a) and 14(b) are overviews of display screens illustrating a process of protecting a mobile terminal from a virus according to a fourth embodiment of the present invention is displayed;

FIG. 15 is a flowchart illustrating a method of protecting a mobile terminal from a virus according to a fifth embodiment of the present invention; and

FIGS. 16(a)-16(c) are overviews of display screens illustrating a process of protecting a mobile terminal from a virus according to a fifth embodiment of the present invention is displayed.

Reference will now be made in detail to the preferred embodiments of the present invention, examples of which are illustrated in the accompanying drawings.

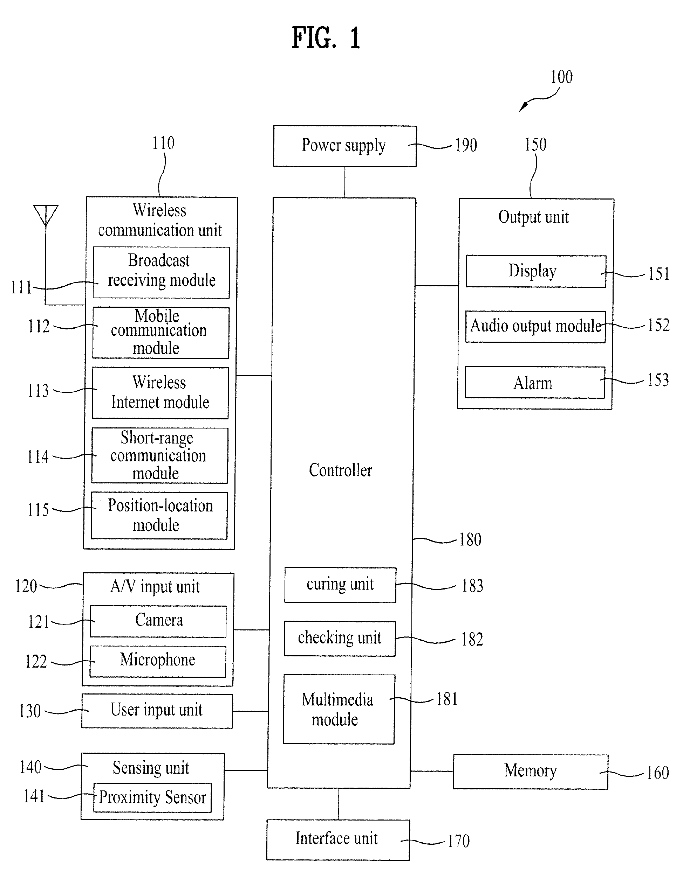

FIG. 1 is a block diagram of a mobile terminal 100 according to an embodiment of the present invention. As shown, the mobile terminal 100 includes a wireless communication unit 110 including one or more components which permit wireless communication between the mobile terminal 100 and a wireless communication system or network within which the mobile terminal is located.

For non-mobile terminals, the wireless communication unit 110 can be replaced with a wire communication unit. The wireless communication unit 110 and wire communication unit can be commonly referred to as a communication unit. Also included is a broadcast receiving module 111 that receives a broadcast signal and/or broadcast associated information from an external broadcast managing entity via a broadcast channel.

The broadcast channel may include a satellite channel and a terrestrial channel. Further, the broadcast managing entity refers to a system which transmits a broadcast signal arld/or broadcast associated information. Examples of broadcast associated information include information associated with a broadcast channel, a broadcast program, a broadcast service provider, etc. For example, the broadcast associated information may include an electronic program guide (EPG) of digital multimedia broadcasting (DMB) and an electronic service guide (ESG) of digital video broadcast-handheld (DVB-H).

In addition, the broadcast signal may be implemented, for example, as a TV broadcast signal, a radio broadcast signal, and a data broadcast signal. The broadcast signal may further include a broadcast signal combined with a TV or radio broadcast signal.

Also, the broadcast receiving module 111 is configured to receive broadcast signals transmitted from various types of broadcast systems. By a non-limiting example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as the media forward link only (MediaFZO®) and the integrated services digital broadcast-terrestrial (ISDB-T) system. Receiving multicast signals is also possible. Further, data received by the broadcast receiving module 111 may be stored in a suitable device, such as a memory 160.

Also included is a mobile communication module 112 that communicates wireless signals with one or more network entities such as a base station or Node-B. Such signals may represent, for example, audio, video, multimedia, control signaling, and data.

Further, a wireless Internet module 113 supports Internet access for the mobile terminal 100. This module may be internally or externally coupled to the mobile terminal 100. Suitable technologies for wireless Internet may include, but are not limited to, WLAN (Wireless LAN)(Wi-Fi), Wibro (Wireless broadband), Wimax (World Interoperability for Microwave Access), and HSDPA (High Speed Downlink Packet Access). The wireless internet module 113 can also be replaced with a wire Internet module in non-mobile terminals. The wireless Internet module 113 and wire Internet module may be commonly referred to as an Internet module.

Further, a short-range communication module 114 facilitates relatively short-range communications. Suitable technologies for short-range communication may include, but are not limited to, radio frequency identification (RFID), infrared data association (IrDA), ultra-wideband (UWB), as well as the networking technologies commonly referred to as Bluetooth and ZigBee.

A position-location module 115 is also included and identifies or otherwise obtains the location of the mobile terminal 100. This module may be implemented using, for example, global positioning system (GPS) components which cooperate with associated satellites, network components, and combinations thereof.

The GPS module 115 is also able to precisely calculate current 3-dimensional position information based on longitude, latitude and altitude by calculating distance information and precise time information from at least three satellites and then applying triangulation to the calculated information. Location and time information are calculated using three satellites, and errors of the calculated location position and time information are then amended using another satellite. Further, the GPS module 115 is able to calculate speed information by continuously calculating a real-time current location.

Also included in the terminal is an audio/video (A/V) input unit 120 that is configured to provide audio or video signals input to the mobile terminal 100. As shown, the A/V input unit 120 includes a camera 121 and a microphone 122. The camera 121 receives and processes image frames of still pictures or video.

In addition, the microphone 122 receives an external audio signal while the portable device is in a particular mode, such as phone call mode, recording mode or voice recognition mode. This audio signal is processed and converted into digital data.

The portable device, and specifically the A/V input unit 120, typically includes assorted noise removing algorithms to remove noise generated in the course of receiving the external audio signal. Data generated by the A/V input unit 120 may be stored in the memory 160, utilized by an output unit 150, or transmitted via one or more modules of the communication unit 110. If desired, two or more microphones and/or cameras may be used.

FIG. 1 also illustrates a user input unit 130 that generates input data responsive to user manipulation of an associated input device or devices. Examples of such devices include a keypad, a dome switch, a touchpad such as static pressure/capacztance, a jog wheel and a jog switch. A specific example is one in which the user input unit 130 is configured as a touchpad in cooperation with a display, which will be described in more detail below.

Further, a sensing unit 140 provides status measurements of various aspects of the mobile terminal 100. For example, the sensing unit may detect an open/close status of the mobile terminal 100, relative positioning of components such as a display and keypad of the mobile terminal, a change of position of the mobile terminal or a component of the mobile terminal, a presence or absence of user contact with the mobile terminal, orientation or acceleration/deceleration of the mobile terminal.

For example, if the mobile terminal 100 is configured as a slide-type mobile terminal, the sensing unit 140 may sense whether a sliding portion of the mobile terminal is open or closed. Other examples include the sensing unit 140 sensing the presence or absence of power provided by a power supply 190, and the presence or absence of a coupling or other connection between an interface unit 170 and an external device.

In addition, the interface unit 170 is implemented to couple the mobile terminal 100 with external devices. Typical external devices include wired/wireless headphones, external chargers, power supplies, storage devices configured to store data such as audio, video, and pictures, as well as earphones and microphones. The interface unit 170 may also be configured using a wired/wireless data port, audio input/output ports, video input/output port, a card socket for coupling to a memory card, a subscriber identity module (SIM) card, a user identity module (UIM) card, or removable user identity module (RUIM) card).

When the mobile terminal 110 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

Further, the output unit 150 includes various components that support the output requirements of the mobile terminal 100 such as a display 151 that is typically implemented to visually display information associated with the mobile terminal 100. For example, if the mobile terminal 100 is operating in a phone call mode, the display 151 provides a user interface or graphical user interface that includes information associated with placing, conducting, and terminating a phone call. As another example, if the mobile terminal 100 is in a video call mode or a photographing mode, the display 151 may additionally or alternatively display images associated with these modes.

One particular implementation includes the display 151 configured as a touch screen working in cooperation with an input device, such as a touchpad. This configuration permits the display 151 to function both as an output device and an input device.

Further, the display 151 may be implemented using display technologies including a liquid crystal display (LCD), a thin film transistor-liquid crystal display (TFT-LCD), an organic light-emitting diode display (OLED), a flexible display and a three-dimensional display.

The display 151 can also have a transparent configuration to enable the user to see through the display 151. This type of display is referred to as a transparent display. As one representative example for the transparent display, a transparent LCD or the like may be used.

Also, the mobile terminal 100 may include one or more display 151. fin example of a two-display embodiment is one in which one display 151 is configured as an internal display viewable when the terminal 100 is in an opened position and a second display 151 configured as an external display viewable in both the open and closed positions.

The touchscreen can also be configured to detect a touch input pressure as well as a touch input position and size. Meanwhile, a proximity sensor 141 can be provided within or around the touchscreen. The proximity sensor 141 detects an object approaching a prescribed detecting surface or a presence or non-presence of an object existing around itself using an electromagnetic power or infrared rays without mechanical contact. Hence, the proximity sensor 141 is advantageous to a contact sensor in lifespan and utilization.

An example for an operational principle of the proximity sensor is explained as follows. First, if an object approaches a sensor detecting surface while an oscillation circuit oscillates a sine radio frequency, an oscillation amplitude of the oscillation circuit attenuates or stops. This change is converted to an electric signal to detect a presence or non-presence of the object. Thus, even if a material (except a metallic material) comes between the RF oscillation proximity sensor and the object, a proximity switch is able to detect the object without interference with the material.

When the proximity sensor is not provided, and if the touchscreen is electrostatic, the touchscreen can be configured to detect the proximity of a pointer through an electric field change attributed to the proximity of the pointer. Thus, when the pointer is placed in the vicinity of the touchscreen without being actually contacted with the touchscreen, the touchscreen can detect a position of the pointer and a distance between the pointer and the touchscreen.

In addition, an action for enabling the pointer approaching the touchscreen to be recognized as placed on the touchscreen is named 'proximity touch' and an action for enabling the pointer to actually come into contact with the touchscreen is named 'contact touch'. Also, a position, at which the proximity touch is made to the touchscreen using the pointer corresponds to a position of the pointer vertically corresponding to the touchscreen when the pointer makes the proximity touch.

If the proximity sensor 141 is used, the proximity sensor 141 is able to sense a proximity touch and its pattern (e.g., proximity touch distance, proximity touch direction, proximity touch speed, proximity touch position, proximity touch moving state, etc.). In addition, the proximity sensor 141 is also able to output information corresponding to the sensed proximity touch action and the proximity touch pattern to the touchscreen.

FIG. 1 further shows the output unit 150 having an audio output module 152 which supports the audio output requirements of the mobile terminal 100. The audio output module 152 is often implemented using one or more speakers, buzzers, other audio producing devices, and combinations thereof.

The audio output module 152 functions in various modes such as call-receiving mode, call-placing mode, recording mode, voice recognition mode and broadcast reception mode. During operation, the audio output module 152 outputs audio relating to a particular function or status, such as call received, message received, or errors.

The output unit 150 is further shown having an alarm 153, which is used to signal or otherwise identify the occurrence of a particular event associated with the mobile terminal 100. Typical events include a call received, message received and user input received.

An example of a signal provided by the output unit 150 is tactile sensations. For example, the alarm 153 may be configured to vibrate responsive to the mobile terminal 100 receiving a call or message. As another example, vibration is provided by the alarm 153 responsive to receiving user input at the mobile terminal 100, thereby providing a tactile feedback mechanism. Further, the various signals provided by the components of the output unit 150 may be separately performed or performed using any combination of such components.

The memory 160 is used to store various types of data to support the processing, control, and storage requirements of the mobile terminal 100. Examples of such data include program instructions for applications operating on the mobile terminal 100, contact data, phonebook data, messages, pictures, and video. Moreover, data for various patterns of vibration and/or sound outputted for a touch input to the touchscreen can be stored in the memory 160.

Map information can also be stored in the memory 160, and thus the user's convenience can be increased by providing the map information to the user if necessary. Moreover, a recent use history or a cumulative use frequency of each menu in the mobile terminal can be stored in the memory 160.

Moreover, vaccine programs for curing a plurality of viruses are stored in the memory 160. Further, the vaccine program is initially provided as default to the memory 160 or can be obtained from an external service provider or another terminal via the mobile communication module 112, the wireless internet module 113 or the short-range communication module 114.

In more detail, a virus represents a code for destroying data of a terminal, a code for interrupting an operation of a terminal, a code for stealing data of a terminal or the like. Further, the virus can be a malignant code or a malignant program.

The memory 160 is also provided with instant messenger software for exchanging instant messages with at least one correspondent party. The instant messenger software enables an instant message service using a message service on a mobile communication network. In particular, the instant messenger software is able to broadcast a message to at least one correspondent party like a PC based instant messenger. Moreover, the at least one correspondent party is able to broadcast a response message to another correspondent party as well.

The memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

A controller 180 is also included and controls the overall operations of the mobile terminal 100. For example, the controller 180 performs the control and processing associated with voice calls, data communications, instant message communication, video calls, camera operations and recording operations.

The controller 180 also includes a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input performed on the touchscreen as characters or images, respectively.

Also included is a checking unit 182 that checks a presence or non-presence of virus infection of data stored in the memory 160 of the mobile terminal 100 under the control of the controller 180. If the virus-infected data exists among the data stored in the memory 160, the checking unit 182 outputs detailed information on the virus to the controller 180. In addition, the detailed information on the virus includes a type of the checked virus, a name of the data infected with the virus, a storage location of the data infected with the virus, an infection route of the virus and the like.

A curing unit 183 is also provided and cures the virus checked by the checking unit 182 using the vaccine program stored in the memory 160. The checking unit 182 and curing unit 183 can also be provided as modules. Alternatively, the modules can be provided as one software configuration in the memory 160.

When the checking unit 182 and the curing unit 183 are provided as software, the software is initially provided as default to the memory 160 or can be obtained from an external service provider or another terminal via the mobile communication module 112, the wireless internet module 113 or the short-range communication module 114.

Further, the power supply 190 provides power used by the various components for the mobile terminal 100. The power may be internal power, external power, or combinations thereof.

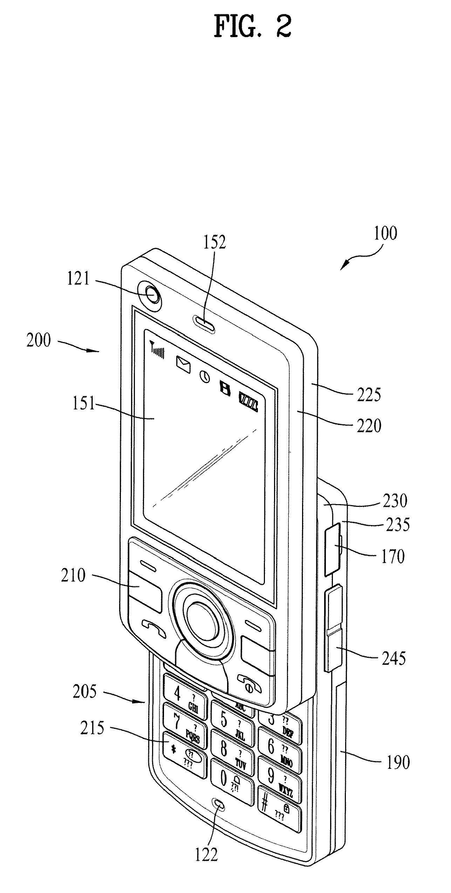

Next, FIG. 2 is a perspective view of a front side of a mobile terminal 100 according to an embodiment of the present invention. In FIG. 2, the mobile terminal 100 is shown having a first body 200 configured to slidably cooperate with a second body 205.

The user input unit 130 described in FIG. 1 may include a first input unit such as function keys and four directional keys 210, a second input unit such as keypad 215 and a third input unit such as side keys 245. The function keys 210 are associated with the first body 200, and the keypad 215 is associated with the second body 205. The keypad includes various keys such as numbers, characters, and symbols to enable a user to place a call, prepare a text or multimedia message, and otherwise operate the mobile terminal 100.

The first body 200 slides relative to the second body 205 between open and closed positions. Further, for a folder-type mobile terminal, the first body thereof folds and unfolds relative to the second body thereof between open and closed positions. In addition, for a swing-type mobile terminal, the first body thereof swings relative to the second body thereof between open and closed positions.

In a closed position, the first body 200 is positioned over the second body 205 in such a manner that the keypad 215 is substantially or completely obscured by the first body 200. In the open position, a user can access to the keypad 215. The function keys 210 are also conveniently configured for a user to enter commands such as start, stop and scroll.

The mobile terminal 100 is also operable in either a standby mode, in which it is able to receive a call or message and to receive and respond to network control signaling or an active call mode. Generally, the mobile terminal 100 functions in the standby mode in the closed position and in an active mode in the open position. This mode configuration may be changed as required or desired.

In addition, the first body 200 is formed from a first case 220 and a second case 225, and the second body 205 is formed from a first case 230 and a second case 235. The first case 230 and second case 235 are generally formed from a suitably rigid material, such as injection molded plastic, or formed using a metallic material, such as stainless steel (STS) and titanium (Ti).

One or more intermediate cases may also be provided between the first case 230 and second case 235 of one or both of the first body 200 and second body 205. The first body 200 and second body 205 are also generally sized to receive electronic components necessary to support operation of the mobile terminal 100.

In addition, the first body 200 is shown having the camera 121 and the audio output unit 152, which is configured as a speaker, positioned relative to the display 151. The camera 121 may also be constructed such that it can be selectively positioned relative to first body 200 such as by rotation or swiveling.

Further, the function keys 210 are positioned adjacent to a lower side of the display 151, which is shown implemented as an LCD or OLED. The display 151 may also be configured as a touch screen having an underlying touchpad which generates signals responsive to user contact with the touchscreen, such as with a finger or stylus.

Also, the second body 205 is shown having the microphone 122 positioned adjacent to the keypad 215 and having the side keys 245, which are one type of a user input unit as mentioned above, positioned along the side of second body 205. Preferably, the side keys 245 are configured as hot keys, such that the side keys 245 are associated with a particular function of the mobile terminal 100. The interface unit 170 is also shown positioned adjacent to the side keys 245, and the power supply 190 in a form of a battery is shown located on a lower portion of the second body 205.

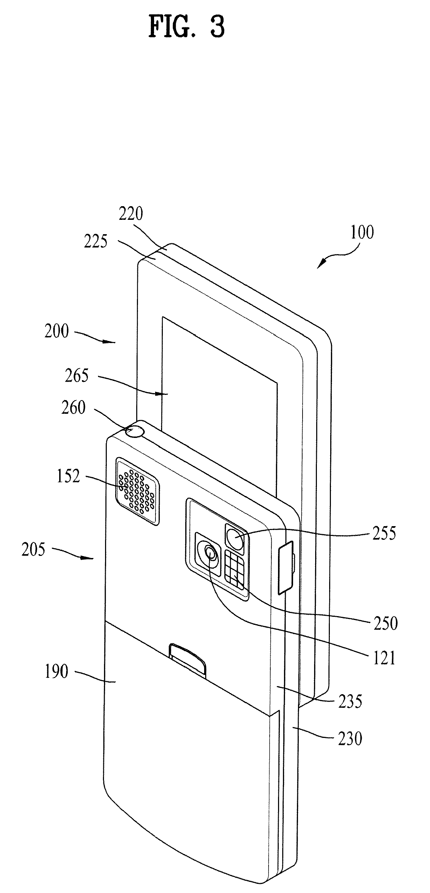

Next, FIG. 3 is a rear perspective view of the mobile terminal 100 shown in FIG. 2. In more detail, FIG. 3 shows the second body 205 having the camera 121 with an associated flash 250 and mirror 255. The flash 250 operates in conjunction with the camera 121, and the mirror 255 is useful for assisting a user to position the camera 121 in a self-portrait mode.

Further, the camera 121 of the second body 205 faces a direction which is opposite to a direction faced by the camera 121 of the first body 200 (FIG. 2). Each of the cameras 121 of the first body 200 and second body 205 may also have the same or different capabilities.

In one embodiment, the camera 121 of the first body 200 operates with a relatively lower resolution than the camera 121 of the second body 205. Such an arrangement works well during a video conference, for example, in which reverse link bandwidth capabilities may be limited. The relatively higher resolution of the camera 121 of the second body 205 (FIG. 3) is useful for obtaining higher quality pictures for later use or for communicating with other parties.

In addition, the second body 205 also includes an audio output module 152 located on an upper side of the second body and which is configured as a speaker. The audio output modules 152 of the first body 200 and second body 205 may also cooperate together to provide stereo output. Moreover, either or both of these audio output modules 152 may be configured to operate as a speakerphone.

Further, a broadcast signal receiving antenna 260 is shown located at an upper end of the second body 205. The antenna 260 functions in cooperation with the broadcast receiving module 111 (FIG. 1). The antenna 260 may also be fixed or configured to retract into the second body 205. Also, the rear side of the first body 200 includes a slide module 265, which slidably couples with a corresponding slide module located on the front side of the second body 205.

It is understood that the illustrated arrangement of the various components of the first body 200 and second body 205 may be modified as required or desired. In general, some or all of the components of one body may alternatively be implemented on the other body. In addition, the location and relative positioning of such components may be positioned at locations which differ from those shown by the representative figures.

In addition, the mobile terminal 100 of Figs. 1-3 may be configured to operate within a communication system which transmits data via frames or packets, including both wireless and wired communication systems, and satellite-based communication systems. Such communication systems utilize different air interfaces and/or physical layers.

Examples of air interfaces utilized by the communication systems include frequency division multiple access (FDMA), time division multiple access (TDMA), code division multiple access (CDMA), the universal mobile telecommunications system (UMTS), the long term evolution (LTE) of the UMTS, and the global system for mobile communications (GSM). By way of non-limiting example only, further description will relate to a CDMA communication system, but such teachings apply equally to other system types.

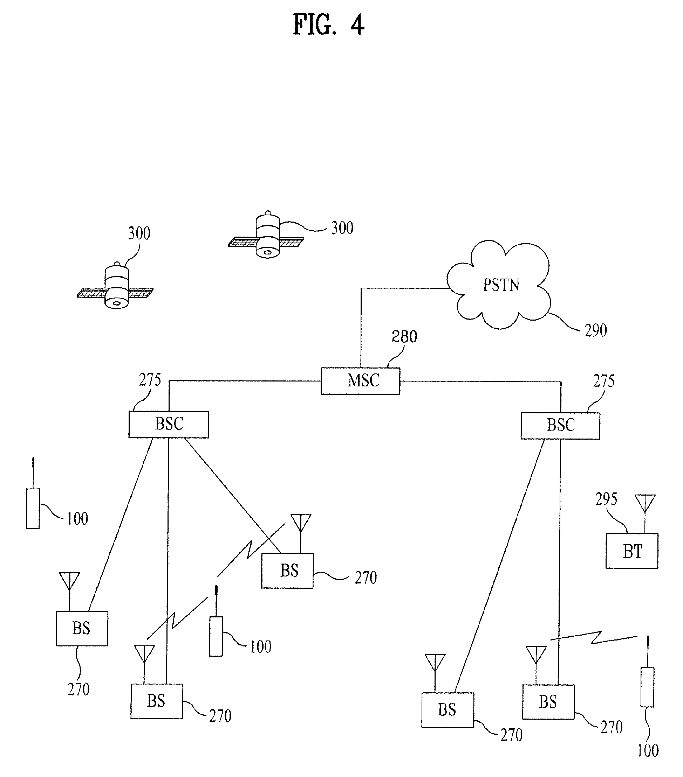

Referring to FIG. 4, a CDMA wireless communication system is shown having a plurality of mobile terminals 100, a plurality of base stations 270, a plurality of base station controllers (BSCs) 275, and a mobile switching center (MSC) 280. The MSC 280 is configured to interface with a public switch telephone network (PSTN) 290. The MSC 280 is also configured to interface with the BSCs 275.

Further, the BSCs 275 are coupled to the base stations 270 via backhaul lines. The backhaul lines may be configured in accordance with any of several interfaces including, for example, E1/T1, ATM, IP, PPP, Frame Relay, HDSL, ADSL, or xDSL. The communication system may also include more than two BSCs 275.

Also, each base station 270 may include one or more sectors, each sector having an omnidirectional antenna or an antenna pointed in a particular direction radially away from the base station 270. Alternatively, each sector may include two antennas for diversity reception. Each base station 270 may also be configured to support a plurality of frequency assignments, with each frequency assignment having a particular spectrum (e.g., 1.25 MHz, 5 MHz).

In addition, the intersection of a sector and frequency assignment may be referred to as a CDMA channel. The base stations 270 may also be referred to as base station transceiver subsystems (BTSs). In some instances, the term "base station" may be used to refer collectively to a BSC 275, and one or more base stations 270. Further, the base stations 270 may also be denoted as "cell sites." Alternatively, individual sectors of a given base station 270 may be referred to as cell sites.

A terrestrial digital multimedia broadcasting (DMB) transmitter 295 is also shown broadcasting to mobile terminals 100 operating within the system. The broadcast receiving module 111 (FIG. 1) of the mobile terminal 100 is generally configured to receive broadcast signals transmitted by the DMB transmitter 295. Similar arrangements may be implemented for other types of broadcast and multicast signaling as discussed above.

FIG. 4 further depicts several global positioning system (GPS) satellites 300. Such satellites facilitate locating the position of some or all of the mobile terminals 100. Two satellites are depicted, but useful positioning information may be obtained with greater or fewer satellites.

In addition, the position-location module 115 (FIG. 1) of the mobile terminal 100 is generally configured to cooperate with the satellites 300 to obtain desired position information. Other types of position detection technology, such as location technology may be used in addition to or instead of GPS location technology. Some or all of the GPS satellites 300 may alternatively or additionally be configured to provide satellite DMB transmissions.

During operation of the wireless communication system, the base stations 270 receive sets of reverse-link signals from various mobile terminals 100. Further, the mobile terminals 100 engage in calls, messaging, and other communications. Each reverse-link signal received by a given base station 270 is also processed within that base station 270. The resulting data is then forwarded to an associated BSC 275.

In addition, the BSC 275 provides call resource allocation and mobility management functionality including soft handoffs between the base stations 270. The BSCs 275 also route the received data to the MSC 280, which provides additional routing services for interfacing with the PSTN 290.

Similarly, the PSTN interfaces with the MSC 280, and the MSC 280 interfaces with the BSCs 275. The BSCs 275 control the base stations 270 to transmit sets of forward-link signals to the mobile terminals 100.

In the following description, a control method applicable to the above-configured mobile terminal 100 is explained with respect to various embodiments. In addition, the following embodiments can be implemented independently or through combinations thereof.

### First Embodiment

According to a first embodiment of the present invention, while the terminal 100 is infected with a virus, and if a user attempts a short-range communication with another terminal, the present invention prevents the other terminal from being infected with the virus by disconnecting the short-range communication.

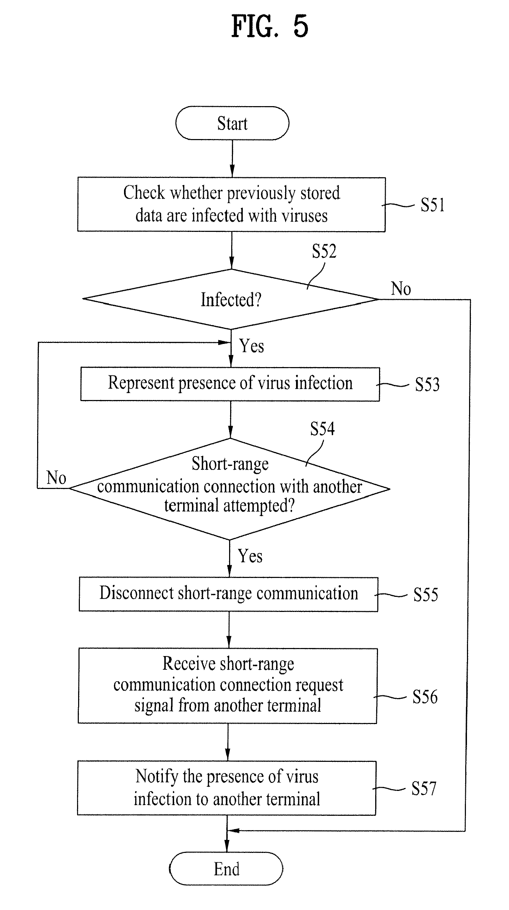

In more detail, FIG. 5 is a flowchart illustrating a method of protecting a mobile terminal from a virus according to a first embodiment of the present invention. Referring to FIG. 5, the controller 180 of the terminal 100 checks whether a plurality of data stored in the memory 160 are infected with viruses by driving the checking unit 182 (S51).

Further, the stored data can include files of image, moving picture, music, document and the like, applications for running the files in the mobile terminal 100 and various programs used for driving the mobile terminal 100. If a user inputs a signal for a virus check command via the input unit 130 or the touchscreen 151, the controller 180 is able to check a presence or non-presence of a virus by controlling the checking unit 182.

The controller 180 can also check a presence or non-presence of a virus infection by controlling the checking unit 182 according to a schedule set by a user. Moreover, the controller 180 can check a presence or non-presence of a virus infection of each of a plurality of the data stored in the mobile terminal 100 or a presence or non-presence of a virus infection of the data stored only in an area set by a user by controlling the checking unit 182.

For instance, if folders A, B and C exist in the memory 160 and if a user designates the folder A, the controller 180 controls the checking unit 182 to check whether or not the data stored in the folder A is infected with viruses.

Also, if at least a portion of data is infected with the virus according to the check result of the checking unit 182 (Yes in S52), the controller 180 displays information for informing a user of the virus infection of the corresponding data (S53).

In this instance, the controller 180 displays the virus-infected data to be discriminated from other data. The controller 180 also temporarily restricts the use of the data until the virus-infected data is cured by the curing unit 183. Moreover, the controller 180 displays a menu or folder, to which the virus-infected data belongs, to be discriminated from other menus or folders. The controller 180 also temporarily restricts the use of the data until the virus-infected data is cured by the curing unit 183.

Meanwhile, while the information indicating the virus infection is displayed, if a signal for attempting a short-range communication connection with another terminal is input via the input unit 130 or the touchscreen 151 (Yes in S54), the controller 180 cuts off or prevents the short-range communication connection (S55).

Moreover, while the short-range communication connection is cut off, and a signal for requesting a short-range communication connection is received from another terminal via the wireless communication unit 110 (S56), the controller 180 sends a message to the other user for announcing the virus infection of the data and then disconnects the short-range communication connection with the corresponding terminal (S57).

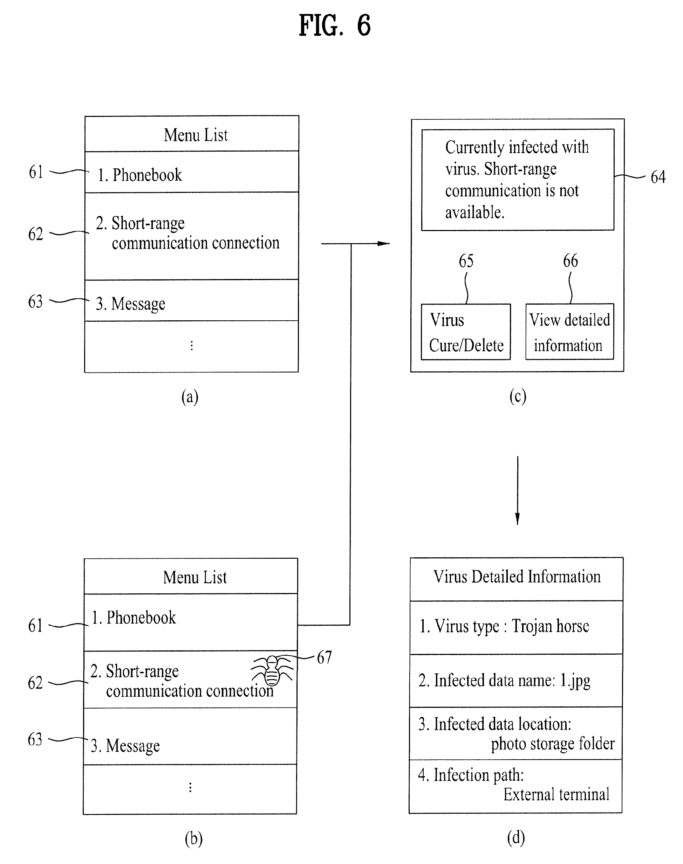

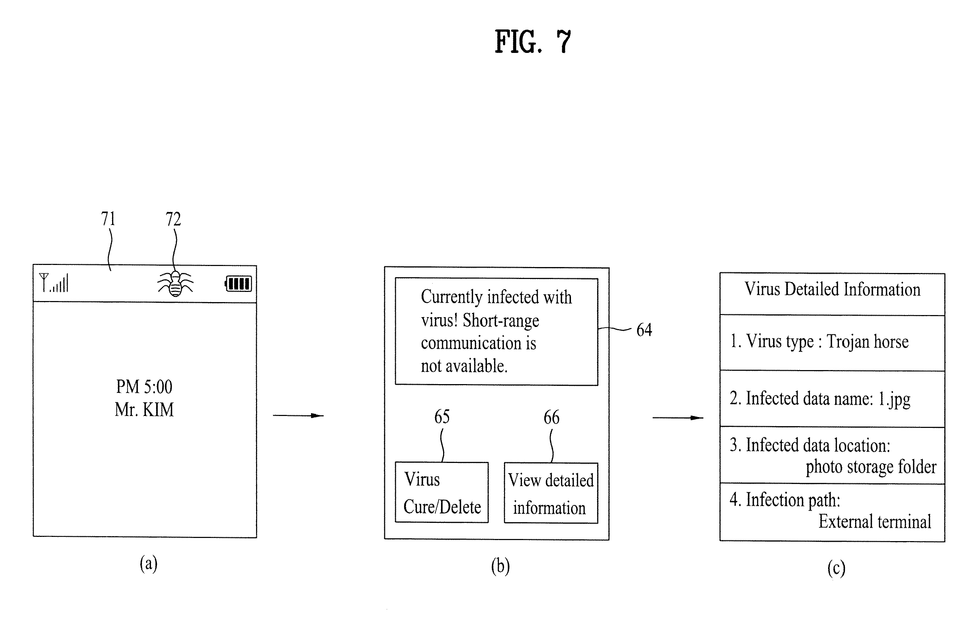

In the following description, the information displaying process of step S53 and the short-range communication disconnecting process of step S55 will be explained in more detail with reference to FIGS. 6(a)-6(c) and FIGs. 7(a)-7(c).

That is, FIG. 6(a)-6(c) are overviews of display screens illustrating a process of informing a user of a virus infection on a menu and a process of disconnecting a short-range communication according to a first embodiment of the present invention are displayed.

Referring to FIG. 6(a), as a check result of the checking unit 182, if at least one virus-infected data exists in the mobile terminal 100, the controller 180 controls the display 151 to discriminately display a menu 62 for a short-range communication connection from other menus 61 and 63 on a menu list of the mobile terminal 100. That is, the controller 180 controls the display 151 to use a display color, display size, font size, etc. of the short-range communication connection menu 62 to be different from the other menus 61 and 63.

Thus, because the short-range communication connection menu 62 is discriminately displayed from the other menus 61 and 63, the user can recognize that their mobile terminal 100 is currently infected with the virus. Accordingly, the user will not attempt the short-range communication connection with the latter terminals until the virus is cured by the curing unit 183.

Referring to FIG. 6(b), as a check result of the checking unit 182, if at least one virus-infected data exists in the mobile terminal 100, the controller 180 can also display an identifier 67 indicating the virus infection within the menu 62 for the short-range communication connection. In addition, the identifier 67 can be displayed as an icon (e.g., a icon representing a bug or virus).

Therefore, the user can see that his or her terminal is infected with the virus. Thus, the user will not attempt or avoid the short-range communication connection with the other terminals until the virus is cured by the curing unit 183.

In addition, if the user selects the short-range communication connection menu 62 shown in FIG. 6(a) or the menu 62 including the identifier 67 shown in FIG. 6(b) by manipulating the input unit 130 or the touchscreen 151 to attempt the short-range communication connection to another terminal, the controller 180 cuts off the short-range communication connection attempted by the user as shown in FIG. 6(c).

The controller 180 then displays information 64 indicating that the use of the short-range communication menu 62 is unavailable, a cure/delete option 65 for selecting 'delete' or 'cure' of the virus-infected data and a detailed information option 66 on the corresponding virus. Moreover, the controller 180 can also control the audio output module 153 to output voice information including the information 64 indicating the unavailability of the short-range communication connection menu 62.

Further, if the user selects the delete/cure option 65 via the input unit 130 or the touchscreen 151, the controller 180 deletes or cures the virus-infected data by controlling the curing unit 183. Also, if the user selects the virus detailed information option 66 via the input unit 130 or the touchscreen 151, the controller 180 displays the detailed information on the virus checked by the checking unit 182 as shown in FIG. 6(d). In particular, the controller 180 displays the virus type, a name and storage location of the virus-infected data, and a virus infection path.

Next, FIGS. 7(a)-7(c) are overviews of display screens illustrating a process of informing a user of a virus infection on a standby screen and a process of disconnecting a short-range communication according to a first embodiment of the present invention are displayed.

Referring to FIG. 7(a), as a check result of the checking unit 182, if at least one virus-infected data exists in the mobile terminal 100, the controller 180 restricts the use of the short-range communication function by controlling the short-range communication module 114 and displays an identifier 72 indicating the virus infection on an indicator area 71 of a standby screen. Further, the identifier 72 can be displayed as an icon.

If the user selects the identifier 72 by manipulating the input unit 130 or the touchscreen 151, the controller 180 displays the information 64 indicating that the use of the short-range communication function is unavailable until the virus is cured, the cure/delete option 65 for selecting 'delete' or 'cure' of the data infected with the virus and the detailed information option 66 on the corresponding virus as shown in FIG. 7(b). Moreover, the controller 180 can also control the audio output module 153 to output voice information including the information 64 indicating the unavailability of the short-range communication function.

Also, if the user selects the delete/cure option 65 via the input unit 130 or the touchscreen 151, the controller 180 deletes or cures the virus-infected data by controlling the curing unit 183. If the user selects the virus detailed information option 66 via the input unit 130 or the touchscreen 151, the controller 180 displays the detailed information on the virus checked by the checking unit 182 as shown in FIG. 7(c). In particular, the controller 180 displays the virus type, a name and storage location of the virus-infected data, and a virus infection path.

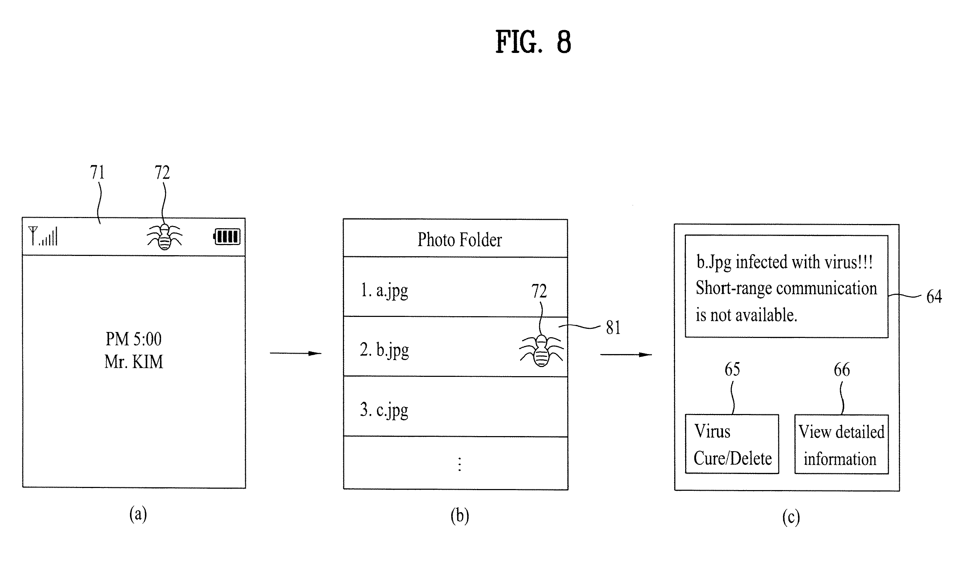

Next, FIGS. 8(a)-8(c) are overviews of display screens illustrating a process for entering a folder, at which virus-infected data is located, from a standby screen according to a first embodiment of the present invention is displayed.

Referring to FIG. 8(a), if the user selects the identifier 72 indicating the virus infection from a standby screen, the controller 180 shifts to a folder (or menu) at which data 81 infected with the virus is located. In addition, as shown in FIG. 8(b), the user can identify the virus-infected data 81 in a manner that the identifier 72 is re-displayed around the virus-infected data 81 among a plurality of data within the corresponding folder.

Optionally, the controller 180 can display the virus-infected data using a display color, display size, font size, etc. of the virus-infected data 81 that is different from the other data within the corresponding folder. Subsequently, if the user selects the identifier 72 or the data 81 by manipulating the input unit 130 or the touchscreen 151, the controller 180 displays the information 64 indicating that the use of the short-range communication function is unavailable until the virus is cured, the cure/delete option 65 for deleting or curing the virus-infected data and the detailed information 66 on the corresponding virus.

### Second Embodiment

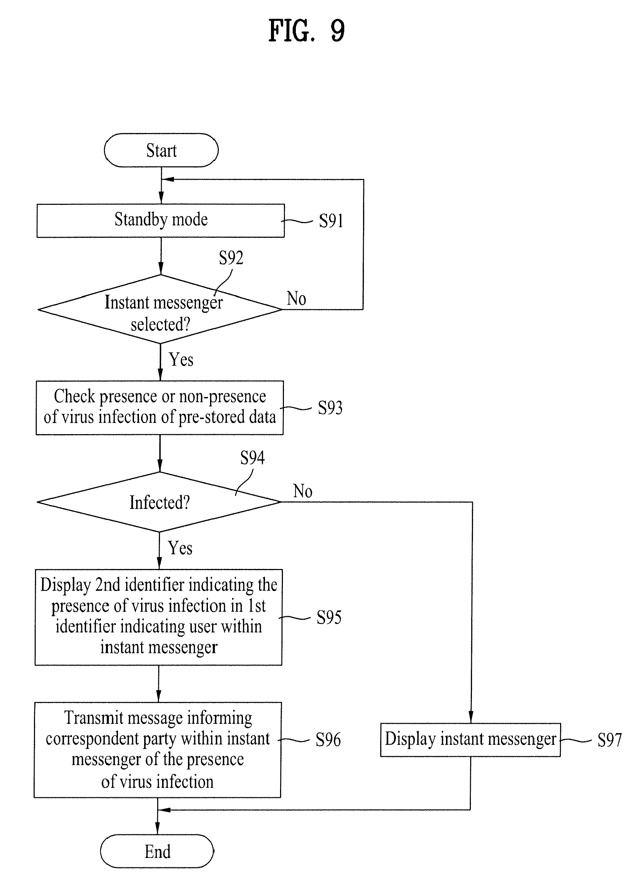

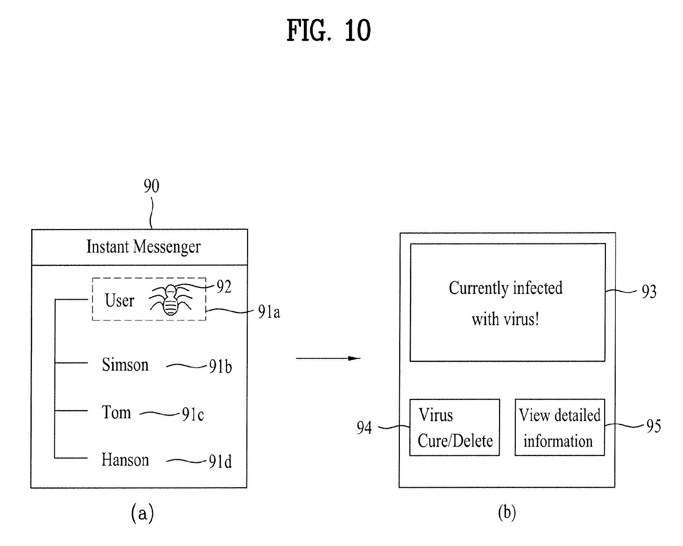

Next, a second embodiment of the present invention will be described with respect to FIGS. 9, 10(a) and 10(b). According to the second embodiment of the present invention, while a user terminal 100 is infected with a virus, if an instant messenger for chatting with other terminals is driven, the other terminals are informed of the virus infection of the user terminal 100

Referring to FIGS. 9, 10(a) and 10(b), when the terminal is in a standby mode (S91), and the user inputs a command for executing an instant message function 90 (see FIG. 10(a)) via the input unit 130 or the touchscreen 151 (Yes in S92), the controller 180 drives the checking unit 182 to check whether a plurality of data stored in the memory 160 are infected with viruses prior to displaying the instant messenger 90 (S93).

As a check result of the checking unit 182, if at least one data infected with the virus exists within the mobile terminal (Yes in S94), the controller 180, as shown in FIG. 10(a), displays the instant message 90 and also displays a second identifier 92 indicating the virus infection of the corresponding data next to a first identifier 91a indicating a user in the instant message 90 (S95).

Further, the first identifier 91a is a user ID and can be represented as a combination of a text, an image, an emoticon, an icon and the like on the instant messenger 90. Also, in steps S91 to S95, if the command for the executing the instant messenger is input, the second identifier 92 is represented within the first identifier 91a by checking a presence or non-presence of the virus infection of the user terminal 100. Alternatively, when the command for executing the instant messenger function is input after a presence or non-presence of the virus infection of the user terminal 100 has been checked, the second identifier 92 can be represented within the first identifier 91a.

Subsequently, the controller 180 sends a message indicating the presence of the virus infection of the user terminal 100 to correspondent conversation parties 91b, 91c and 91d pre-registered on the instant messenger via the wireless communication unit 110 (S96).

As mentioned in the above description, according to the second embodiment of the present invention, if the instant messenger 90 is driven while the user terminal 100 is infected with a virus, the presence of the virus infection of the user terminal 100 is announced to the correspondent conversation parties 91b, 91c and 91d using the second identifier 92 indicating the presence of the virus infection within the first identifier 91a on the instant messenger 90. Therefore, the virus infection can be prevented in advance.

Meanwhile, if the user selects the second identifier 92 by manipulating the input unit 130 or the touchscreen 151, the controller 180 displays information 93 indicating the presence of the virus infection, a cure/delete option 94 for deleting or curing the virus-infected data and detailed information option 95 on the corresponding virus as shown in FIG. 10(b). The controller 180 can also control the audio output module 153 to output voice information including the information 93 indicating the presence of the virus infection.

Similar to the first embodiment, if the user selects the delete/cure option 94 via the input unit 130 or the touchscreen 151, the controller 180 deletes or cures the virus-infected data by controlling the curing unit 183. If the user selects the virus detailed information option 95 via the input unit 130 or the touchscreen 151, the controller 180 displays the detailed information on the virus that has been checked by the checking unit 182. As discussed above, the virus detailed information includes the virus type, a name and storage location of the virus-infected data, and a virus infection path.

Meanwhile, if the data infected with the virus does not exist in the mobile terminal 100 (No in S94), the controller 180 displays the former instant messenger 90 without the second identifier 92 (S97).

### Third Embodiment

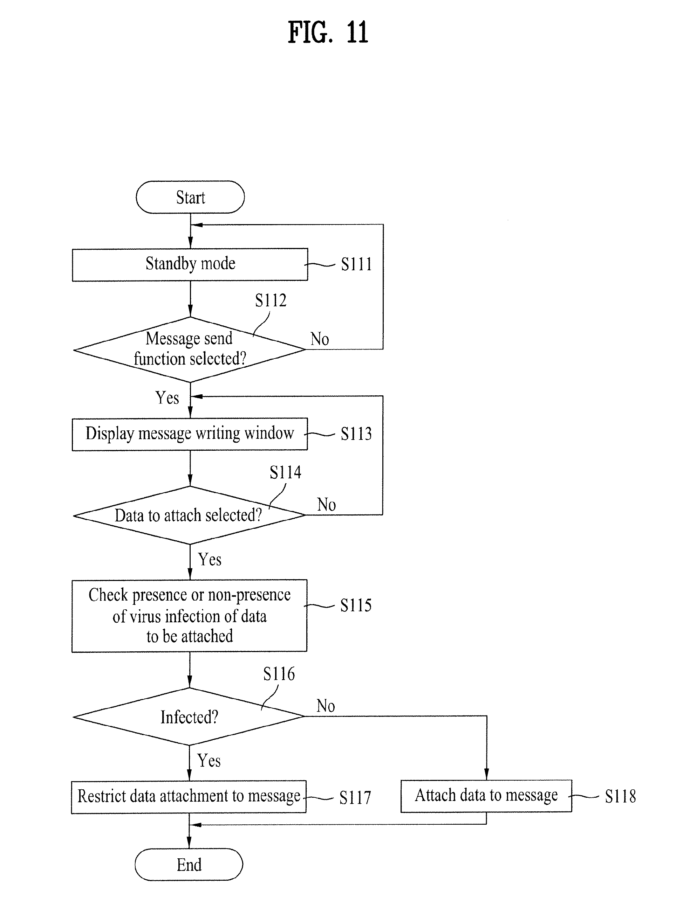

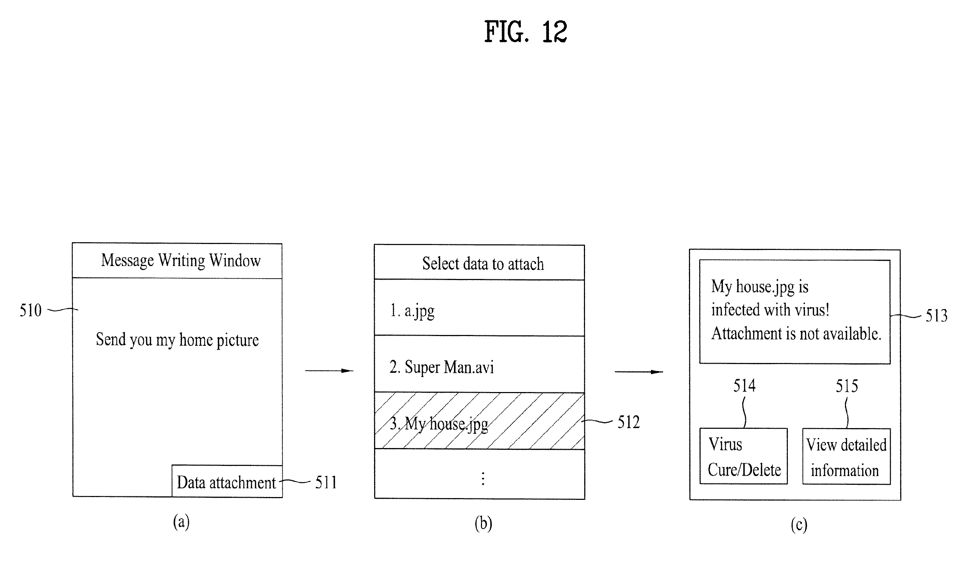

Next, a third embodiment of the present invention will be described with respect to FIGS. 11 and 12(a)-12(c). According to the third embodiment of the present invention, when data of the user terminal 100 is infected with a virus, and the user attaches the infected data to a message to transmit to another terminal, the controller 180 prevents the virus of the user terminal 100 from being transmitted to the other terminal by restricting the attachment of the infected data.

Referring to FIG. 11 and FIG. 12(a)-12(c), when the terminal 100 is in a standby mode (S111), and the user inputs a command for executing a message send function via the input unit 130 or the touchscreen 151 (Yes in S112), the controller 180 displays a message writing window 510 (S113) (see also FIG. 12(a)).

Subsequently, if the user inputs a command 511 for selecting data to be attached to a message in the message writing window 510 via the input unit 130 or the touchscreen 151, the controller 180 displays a list of a plurality of data stored in the memory 160 as shown in FIG. 12(b). Also, if the user selects the data 512 to be attached to the message from the data list (Yes in S114), the controller 180 checks a presence or non-presence of a data infection of the selected data 512 by driving the checking unit 182 (S115).

Further, in steps S111 to S115, the presence or non-presence of the data infection of the selected data 512 is only checked. Alternatively, the checking unit 182 can check whether the entire data stored in the memory 160 are infected with viruses according to a schedule preset by the user in advance.

As a result of the check of the checking unit 182, if the selected data 512 is infected with the virus (Yes in S116), the controller 180 displays information 513 indicating the presence of the virus infection of the selected data 512, a cure/delete option 514 for deleting or curing the selected data 512 and a detailed information option 515 on the corresponding virus as shown in FIG. 12(c). The controller 180 also restricts the attachment of the selected data 512 (S117).

If the user selects the option 514, the controller 180 controls the curing unit 183 to cure the virus of the selected data 512 and then releases the attachment restriction of the virus-cured data 512. Meanwhile, as a check result of the checking unit 182, if the selected data 512 is not infected with the virus (No in S116), the controller 180 attaches the selected data 512 to the message (S118).

Further, the wireless communication connection corresponds to a transmit message wireless communication with at least one other terminal, and when the checking unit 182 finds virus-infected data that corresponds to data to be transmitted to the at least one other terminal, the controller 180 deactivates the virus-infected data such that the deactivated virus-infected data can not be selected.

### Fourth Embodiment

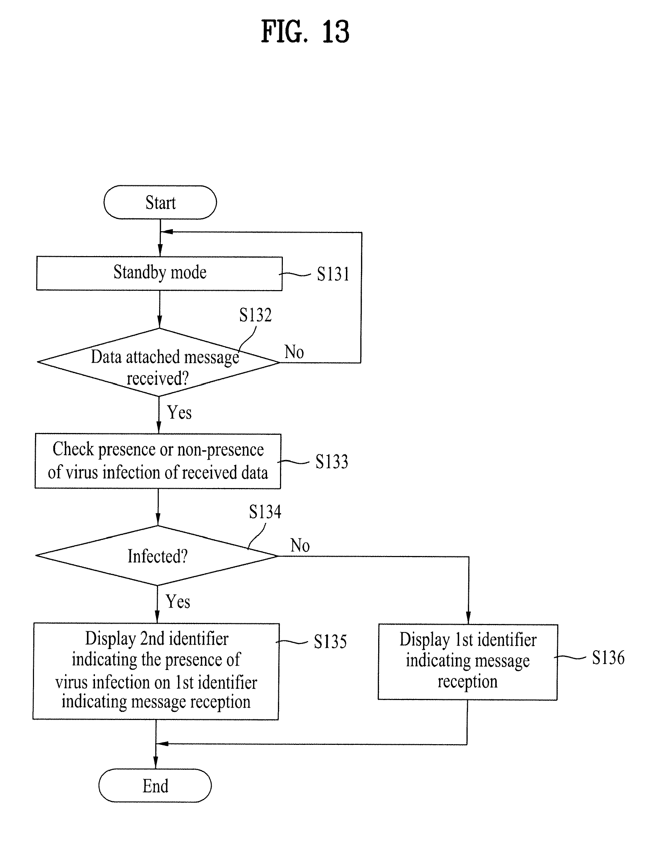

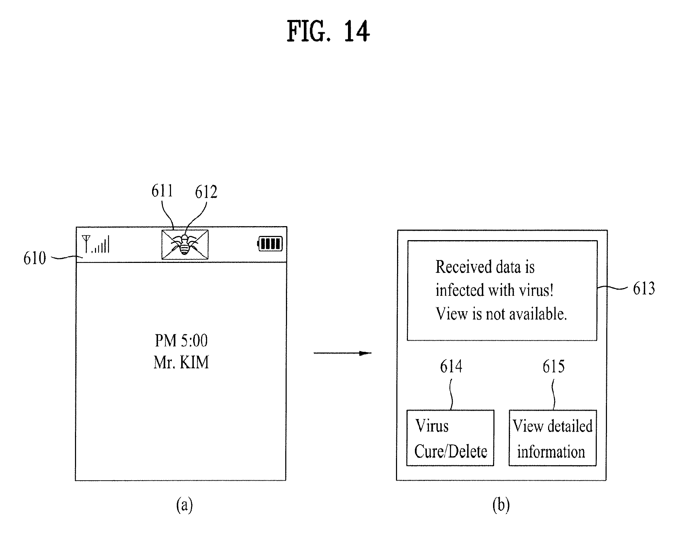

Next, a fourth embodiment of the present invention will be described with respect to FIGS. 13, 14(a) and 14(b). According to the fourth embodiment of the present invention, when data infected with a virus is attached to a message received from another terminal, a second identifier indicating a presence of a virus infection of the data is represented within a first identifier indicating the reception of the message. Therefore, the user can see that the virus-infected data is attached to the currently received message.

Referring to FIGS. 13, 14(a) and 14(b), when the terminal 100 is in a standby mode (S131), and if a message having data attached thereto is received from another terminal via the wireless communication unit 110 (Yes in S132), the controller 180 drives the checking unit 182 to check whether the data attached to the message is infected with a virus (S133).

In particular, if the message is received, the controller 180 preferentially checks a presence or non-presence of the virus infection of the data attached to the message via the checking unit 182 before displaying a content of the message and an identifier indicating reception of the message. Subsequently, as a check result of the checking unit 182, if the data attached to the message is infected with the virus (Yes in S134), the controller 180, as shown in FIG. 14(a), displays the first identifier 161 indicating the reception of the message in an indicator area 610 on the screen and also displays a second identifier 612 indicating the presence of the virus infection of the data within the first identifier 611 (S135). Thus, the user can see that the virus-infected data is attached to the currently received message.

Meanwhile, as a check result of the checking unit 182, if the data attached to the message is not infected with the virus (No in S134), the controller 180 displays the first identifier 611 indicating the reception of the message on the indicator area 610 (S136). Moreover, if the user selects the second identifier 612 via the input unit 130 or the touchscreen 151, the controller 180 displays information 613 indicating the presence of the virus infection of the data attached to the received message, a cure/delete option 614 for deleting or curing the data and a detailed information option 615 on the virus as shown in FIG. 14(b).

Further, the controller 180 prevents the infection of the virus by restricting the display of the message and the execution of the data until the data attached to the message is cured. If the user selects the cure/delete option 613, the controller 180 controls the curing unit 183 to cure the virus of the data attached to the message, stops the display of the second identifier 612, and releases the restriction of the display of the message and the restriction of the execution of the data. The user can also view the detailed information about the virus by selecting the option 615.

### Fifth Embodiment

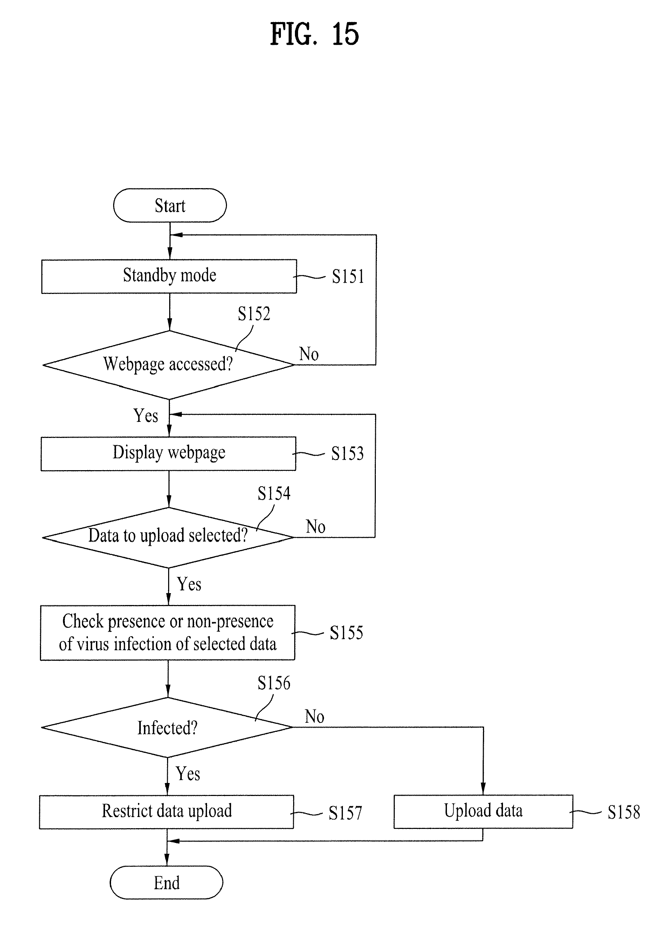

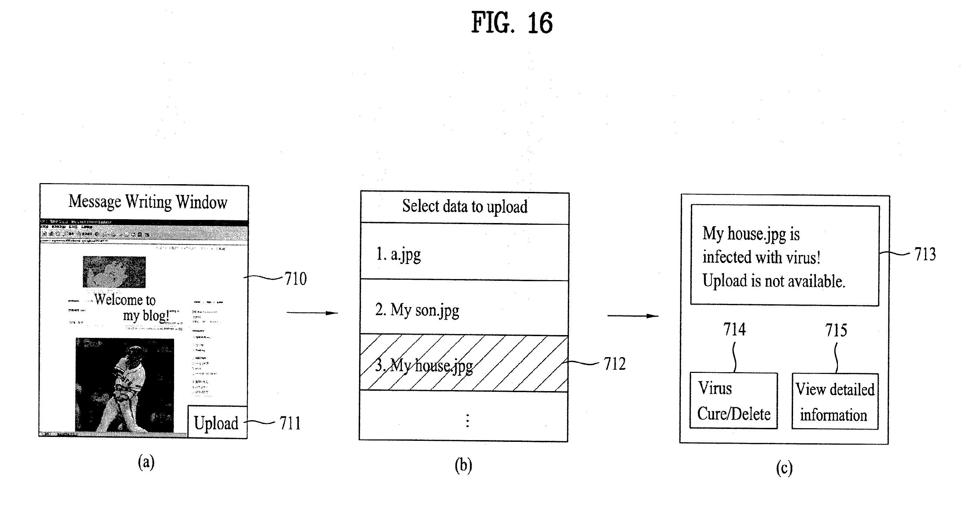

Next, a fifth embodiment of the present invention will be described with respect to FIGS. 15 and 16(a)-16(c). According to the fifth embodiment of the present invention, while data of a user terminal is infected with a virus, and if the user attempts to upload the infected data to a website such as a homepage and the like, the controller 180 cuts off or prevents the upload of the data, thereby preventing the website from being infected with the virus. A similar concept applies to downloading virus-infected data from the website.

Referring to FIGS. 15 and 16(a)-16(c), when the terminal is in a standby mode (S151), and if the user inputs a command for accessing a webpage 710 (see FIG. 16(a)) via the input unit 130 or the touchscreen 151 (Yes in S152), the controller 180 controls the wireless Internet module 113 to access the webpage 710 and then displays the webpage 710 on the screen (S153). In addition, the webpage 710 can also include a personal blog or homepage of the user.

If the user inputs a command 711 for selecting data to be uploaded to the webpage 710 via the input unit 130 or the touchscreen 151, the controller 180 displays a list of a plurality of data stored in the memory 160 as shown in FIG. 16(b). If the user selects the data 712 to be uploaded to the webpage 710 from the data list (Yes in S154), the controller 180 checks whether the selected data 712 is infected with a virus by driving the checking unit 182 (S155).

In addition, in steps S151 to S155, the presence or non-presence of the data infection of the selected data 712 is only checked. Alternatively, the checking unit 182 can check whether the entire data stored in the memory 160 are infected with viruses according to a schedule preset by the user in advance.

As a result of the check of the checking unit 182, if the selected data 712 is infected with the virus (Yes in S156), the controller 180, as shown in FIG. 16(c), displays information 713 indicating the presence of the virus infection of the selected data 712, a cure/delete option 714 for deleting or curing the selected data 712 and a detailed information option 715 on the corresponding virus. Further, the controller 180 restricts or prevents the upload of the selected data 512 (S157).

If the user selects the option 714, the controller 180 controls the curing unit 183 to cure the virus of the selected data 712 and then releases the upload restriction of the virus-cured data 712. The user can also view the detailed information about the virus by selecting the option 715.

Meanwhile, as a check result of the checking unit 182, if the selected data 712 is not infected with the virus (No in S156), the controller 180 uploads the selected data 712 to the webpage 710 by controlling the wireless communication module 113 (S158).

Accordingly, the present invention provides several advantages.

First, while a user terminal is infected with a virus, and if a short-range communication connection with another terminal is attempted, the connection attempt is prevented, thereby preventing other terminals from being infected with the virus.

Secondly, while a user terminal is infected with a virus, and if an instant messenger for chatting with other terminals is driven, the controller 180 displays a presence of a virus infection of the user terminal on the instant messenger, thereby preventing other terminals from being infected with the virus.

Thirdly, while data of a user terminal is infected with a virus, and if the user attaches the infected data attached to a message to send to another terminal, the controller 180 cuts off the attachment, thereby preventing the other terminal from being infected with the virus.

Fourthly, if data infected with a virus is attached to a message received from another terminal, the controller 180 represents a second identifier indicating a presence of a virus infection of the data within a first identifier indicating the reception of the message, thereby preventing the user terminal from being infected with the virus.

Fifthly, while data of a user terminal is infected with a virus, if the user attempts an upload of the infected data to such a website as a personal blog, a homepage and the like, the controller 180 cuts off the upload attempt, thereby preventing the website 1 from being infected with the virus.

In addition, various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments may also be implemented by controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

Further, the above-described methods can be implemented in a program recorded medium as computer-readable codes. The computer-readable media include all types of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via the Internet).

The mobile terminal 100 may also be implemented in a variety of different configurations. Examples of such configurations include folder-type, slide-type, bar-type, rotational-type, swing-type and combinations thereof.

Further, the embodiments of the present invention are applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators.

As the present invention may be embodied in several forms, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A method of controlling a mobile terminal (100), the method comprising:
checking at least a portion of data stored in a memory (160) of the terminal for virus-infected data infected with a virus; and
when the checking step finds virus-infected data, preventing a wireless communication connection with at least one other terminal or, if there is a wireless connection with at least one other terminal, notifying the at least one other terminal that the mobile terminal includes the virus-infected data.

2. The method of claim 1, further comprising:
curing the virus-infected data using a vaccine program.

3. The method of claim 1 or 2, wherein when the checking step finds the virus-infected data, the wireless communication connection with at least one other terminal is prevented and the method further comprises displaying an identifier (72; 67) indicating a presence of the virus-infected data within an indicator area (71) of a display region on the terminal or within a menu (62) used for the wireless communication connection.

4. The method of claim 3, wherein if the displayed identifier (72; 67) is selected, the method further comprises displaying a window including an option (515; 66) for viewing detailed information about the virus, and an option (514; 65) for curing or deleting the virus-infected data.

5. The method of claim 4, wherein the detailed information on the virus comprises at least one of a type of the virus, a file name of the virus-infected data, a location of the virus-infected data and an infection path of the virus.

6. The method of any one of claims 3 to 5, wherein if the displayed identifier (72; 67) is selected, the method further comprises displaying a folder or menu including the virus-infected data and discriminately displaying the virus-infected data from other data included in the folder or menu.

7. The method of any one of claims 1 to 6, wherein the wireless communication connection corresponds to short-range wireless communication with said at least one other terminal.

8. The method of any one of claims 1 to 7, wherein the wireless communication connection corresponds to a transmit message wireless communication with said at least one other terminal, and
wherein when the checking step finds virus-infected data that corresponds to data to be transmitted to the at least one other terminal, the method further comprises discriminately displaying that the data to be transmitted is virus-infected data.

9. The method of any one of claims 1 to 7, wherein the wireless communication connection corresponds to a transmit message wireless communication with said at least one other terminal, and
wherein when the checking step finds virus-infected data that corresponds to data to be transmitted to the at least one other terminal, the method further comprises deactivating the virus-infected data such that the deactivated virus-infected data cannot be selected.

10. The method of claim 1 or 2, wherein the wireless communication connection corresponds to an instant messenger wireless communication with said at least one other terminal, and
wherein when the checking step finds the virus-infected data, the at least one other terminal is notified that the mobile terminal includes the virus-infected data and the method further comprises displaying an identifier (92) indicating a presence of the virus-infected data near a messenger name of a user requesting the instant messenger wireless communication.

11. The method of claim 1 or 2, wherein the wireless communication connection corresponds to a receive message wireless communication with said at least one other terminal, and
wherein when the checking step finds virus-infected data that corresponds to data received from the at least one other terminal, the at least one other terminal is notified that the mobile terminal includes the virus-infected data and the method further comprises discriminately displaying that the data received is virus-infected data.

12. The method of claim 1 or 2, wherein the wireless communication connection corresponds to a webpage access wireless communication on said at least one other terminal, and
wherein when the checking step finds virus-infected data that corresponds to upload/download data to be uploaded or downloaded to or from a webpage on the at least one other terminal, the at least one other terminal is notified that the mobile terminal includes the virus-infected data and the method further comprises discriminately displaying that the upload/download data is virus-infected data.

13. A mobile terminal, comprising:
a display module (151);
a memory (160) configured to store data;
a wireless communication unit (110) configured to wirelessly connect with at least one other terminal;
a checking unit (182) configured to check at least a portion of the stored data for virus-infected data infected with a virus; and
a controller (180) configured, when the checking unit finds virus-infected data infected with a virus, to prevent a wireless communication connection with the at least one other terminal or to notify the at least one other terminal that the mobile terminal includes the virus-infected data.

14. The mobile terminal of claim 13, wherein the controller (180) is further configured to perform the steps of a method as claimed in any one of claims 2 to 12.

## Amended claims

### Amended claims in accordance with Rule 137(2) EPC.

**1.** A method of controlling a mobile terminal (100), the method comprising:
checking at least a portion of data stored in a memory (160) of the terminal for virus-infected data infected with a virus; and
when the checking step finds virus-infected data, preventing a short-range wireless communication connection with at least one other terminal and , if there is a short-range wireless connection with at least one other terminal, notifying the at least one other terminal that the mobile terminal includes the virus-infected data.

**2.** The method of claim 1, further comprising:
curing the virus-infected data using a vaccine program.

**3.** The method of claim 1 or 2, wherein when the checking step finds the virus-infected data, the wireless communication connection with at least one other terminal is prevented and the method further comprises displaying an identifier (72; 67) indicating a presence of the virus-infected data within an indicator area (71) of a display region on the terminal or within a menu (62) used for the wireless communication connection.

**4.** The method of claim 3, wherein if the displayed identifier (72; 67) is selected, the method further comprises displaying a window including an option (515; 66) for viewing detailed information about the virus, and an option (514; 65) for curing or deleting the virus-infected data.

**5.** The method of claim 4, wherein the detailed information on the virus comprises at least one of a type of the virus, a file name of the virus-infected data, a location of the virus-infected data and an infection path of the virus.

**6.** The method of any one of claims 3 to 5, wherein if the displayed identifier (72; 67) is selected, the method further comprises displaying a folder or menu including the virus-infected data and discriminately displaying the virus-infected data from other data included in the folder or menu.

**7.** The method of any one of claims 1 to 6, wherein the wireless communication connection corresponds to a transmit message wireless communication with said at least one other terminal, and
wherein when the checking step finds virus-infected data that corresponds to data to be transmitted to the at least one other terminal, the method further comprises discriminately displaying that the data to be transmitted is virus-infected data.

**8.** The method of any one of claims 1 to 6, wherein the wireless communication connection corresponds to a transmit message wireless communication with said at least one other terminal, and
wherein when the checking step finds virus-infected data that corresponds to data to be transmitted to the at least one other terminal, the method further comprises deactivating the virus-infected data such that the deactivated virus-infected data cannot be selected.

**9.** The method of claim 1 or 2, wherein the wireless communication connection corresponds to an instant messenger wireless communication with said at least one other terminal, and
wherein when the checking step finds the virus-infected data, the at least one other terminal is notified that the mobile terminal includes the virus-infected data and the method further comprises displaying an identifier (92) indicating a presence of the virus-infected data near a messenger name of a user requesting the instant messenger wireless communication.

**10.** The method of claim 1 or 2, wherein the wireless communication connection corresponds to a receive message wireless communication with said at least one other terminal, and
wherein when the checking step finds virus-infected data that corresponds to data received from the at least one other terminal, the at least one other terminal is notified that the mobile terminal includes the virus-infected data and the method further comprises discriminately displaying that the data received is virus-infected data.

**11.** The method of claim 1 or 2, wherein the wireless communication connection corresponds to a webpage access wireless communication on said at least one other terminal, and
wherein when the checking step finds virus-infected data that corresponds to upload/download data to be uploaded or downloaded to or from a webpage on the at least one other terminal, the at least one other terminal is notified that the mobile terminal includes the virus-infected data and the method further comprises discriminately displaying that the upload/download data is virus-infected data.

**12.** A mobile terminal, comprising:
a display module (151);
a memory (160) configured to store data;
a short-range wireless communication unit (110) configured to wirelessly connect with at least one other terminal;
a checking unit (182) configured to check at least a portion of the stored data for virus-infected data infected with a virus; and
a controller (180) configured, when the checking unit finds virus-infected data infected with a virus, to prevent a short-range wireless communication connection with the at least one other terminal and to notify the at least one other terminal that the mobile terminal includes the virus-infected data if the short-range wireless communication connection is already established.

**13.** The mobile terminal of claim 12, wherein the controller (180) is further configured to perform the steps of a method as claimed in any one of claims 2 to 11.
